# EUROPEAN PATENT APPLICATION

(11) **EP 0 843 423 A1**
(43) Date of publication of application: **20.05.1998**
(21) Application number: 97906852.5
(22) Date of filing: 07.03.1997
(51) Int. Cl.: H04B 7/26

(54) **DATA RELAY TRANSMITTER, DATA TRANSMISSION SYSTEM, AND DATA TRANSMITTING METHOD**

(30) Priority: 07.03.1996 JP 50426/96
(71) Applicant: NTT MOBILE COMMUNICATIONS NETWORK INC., Minato-ku, Tokyo 105-8436 (JP)
(72) Inventor: SAWAI, Koichi, Yokohama-shi, Kanagawa 235 (JP)
(74) Representative: Ritter und Edler von Fischern, Bernhard, Dipl.-Ing.
(86) International application number: JP9700711
(87) International publication number: WO9733387

(57) **Abstract**

Communication adapters ADP10 and ADP20 maintain a data transference mode even if the channel is disconnected in transmitting data (S203), and a judgment is made whether or not an out of range display indicates the state "ON". When the communication channel is recovered, the display is turned to "OFF". In this case, a caller's ID and other information is transmitted from a caller's party(S206), and a judgment is made on a receiving party whether or not the caller's ID is identical with the caller's ID at disconnection of the channel(S208). If the both IDs are identical, then a judgment is made whether or not communication protocols are matched (S209). If the protocols are matched, then the data transmission is restarted(S210). In this way, the data transmission can be restarted automatically when the channel is disconnected during transmitting data.

## Description

### Field of the Invention

The present invention relates to a data link transmission equipment, a data transmission system and a method thereof, in particular, to those which are preferable to a service for high speed data transmission by digital mobile stations.

### Background Art

In highly developed information oriented society, it is desirable for persons to exchange their information, whenever and wherever they are. Therefore, high speed mobile data communication system has come into wide use recently and rapidly, which enables users to communicate together in their moving, as well as suitable for portability. According to the high speed mobile data communication system, which enable users to perform communication even when they are moving, it is advantageous to perform communication from a rapidly moving vehicle or a train such as the super express, at their convenience.

Now that, in the high speed mobile data transmission system, data transmission is performed through a radio wave channel because the communication is performed under mobile condition. For this reason, the communication cannot be performed at a place where the radio wave does not arrive. For example, in case of movement from Tokyo to Osaka by the super express, the communication channel is disconnected in a period when the train enters a tunnel because radio wave does not arrive. In this case, it is necessary for users to make a request calling again.

In order to resolve the above mentioned problem, it is thought to construct a leakage coaxial cable in the tunnel for transmitting or receiving of the radio wave in order to establish the communication. However, there is another disadvantage that enormous expense is needed in order to construct the leakage coaxial cable. Moreover, there is still other disadvantage that it takes long time to construct the leakage coaxial cable because work for construction is limited at night when trains do not run.

### Disclosure of the Invention

The present invention was made in view of the above mentioned problems, the object of the present invention is to provide a data link transmission equipment, a data link transmission system and a method thereof, which enable data transmission to restart without any disadvantages for users.

According to one view of the present invention, there is provided in a data link transmission equipment, intermediate between a terminal and a communication channel, comprising:
call request means for requesting call originating or call receiving from the communication channel in response to a command from the terminal;
control means for controlling the communication channel, for connecting the communication channel with the terminal to transmit the data transferred from the terminal to the communication channel, and for controlling the communication channel, connecting the communication channel with the terminal to transfer the data received from the communication channel to the terminal; and
re-call request means for requesting call originating or call receiving again with the proviso that the communication channel is disconnected during the data transmission, and that recovery of the communication channel is detected successively.

Further, there may be provided in a data link transmission equipment intermediate between a terminal and a communication channel comprising:
call request means for requesting call originating or call receiving from the communication channel in response to a command from the terminal;
response means for detecting a confirm command transmitted from the terminal, the confirm command confirming that the state of communication is in order, and for returning a response command to the terminal, the response command showing that the state of communication is in order;
control means for controlling the communication channel, for connecting the communication channel with the terminal to transmit the data transferred from the terminal to the communication channel, and for controlling the communication channel, connecting the communication channel with the terminal to transfer the data received from the communication channel to the terminal; and
re-call request means for requesting call originating or call receiving again with the proviso that the communication channel is disconnected during the data transmission, and that recovery of the communication channel is detected successively.

Moreover, there may be provided in the data link transmission equipment according to 1 or 2, further characterized in:
that the control means on a transmitting party is to transmit a discriminating data for identifying the transmitter, as well as the data transferred from the terminal, to the communication channel;
that the control means on a receiving party is to memorize the discriminating data as well as transferring the data received from the communication channel, to the terminal; and
that the control means on the receiving party connects the terminal with the communication channel again, with the proviso that the communication channel is disconnected during the data transmission, and that recovery of the communication channel is detected successively, and that the identity between the memorized discriminating data and received discriminating data is detected.

According to the present invention, there is provided in a data transmission system comprising:
a terminal to perform at least either transmission or receiving of data; and
data link transmission equipment according to anyone of claims 1, 2 or 3.

Furthermore, according to the present invention, there is provided in a data transmission method to transmit data between a pair of terminals through a communication channel, the method comprising:
a step to request call originating or call receiving from the communication channel in response to a command from the terminal;
a step to connect the communication channel with the terminal to transmit the data transferred from the terminal to the communication channel, and for controlling the communication channel, connecting the communication channel with the terminal to transfer the data received from the communication channel to the terminal;
a step to memorize the discriminating data, as well as transferring the data received from the communication channel, to the terminal;
a step to request recall originating independent of the command from the terminal and to transmit the discriminating data to the communication channel, with the proviso that the communication channel is disconnected during the data transmission, and that recovery of the communication channel is detected successively;
a step to request recall receiving independent of the command from the terminal and to receive the discriminating data to the communication channel, with the proviso that the communication channel is disconnected during the data transmission, and that recovery of the communication channel is detected successively; and
a step to restart the data transmission with proviso that identity between the received discriminating data and the memorized discriminating data is detected.

### Brief Description of Drawings

Fig. 1 is a block diagram of an embodiment of the present invention.

Fig.2 is a sequence diagram illustrating the operation of the embodiment.

Fig.3 is a sequence diagram illustrating the operation of the embodiment.

Fig.4 is a sequence diagram illustrating the operation of the embodiment.

Fig.5 is a flow chart illustrating the operation of the communication adapter from holding mode to data transference mode, relating to the embodiment.

Fig.6 is a flow chart illustrating the operation of the communication adapter at the data transference mode, relating to the embodiment.

### Best Embodiment for Carrying Out the Invention

### 1. Composition of a Preferred Embodiment of the Invention

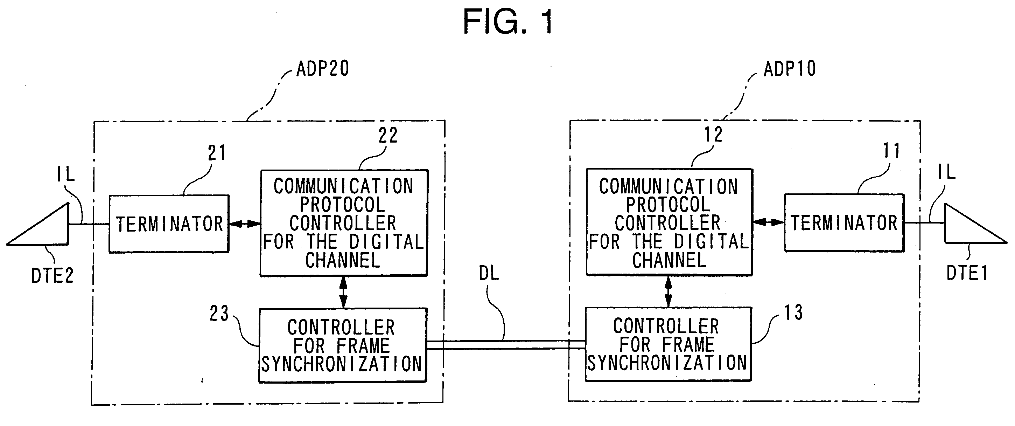

The composition of embodiments for carrying out the present invention will be described hereafter, with reference to the drawings. Fig.1 is a block diagram showing a data transmission system of an embodiment of the present invention.

In Fig.1, the symbol DTE1 designates a note style computer connected to a mobile station through a modem. Similarly, the symbol DTE2 designates a host computer connected to another mobile station through another modem. Each of the note style computer DTE1 and the host computer DTE2 is composed of a keyboard for inputting letters and others, and a display for indicating images, letters and others. The symbols ADP10 and ADP20 designate communication adapters composed of a modem and a mobile station. The communication adapters ADP10 and ADP20 are connected together through digital communication channel DL, between which the data transmission is performed.

Next, reference numerals 11 and 21 designate terminal ends of connection formed in the modems, which are connected with the note style computer DTE1 and the host computer DTE2 through connecting cables IL1 and IL2 respectively. Further, terminator of each terminal end of connection is set so as to obtain impedance matching.

Moreover, reference numerals 12 and 22 designate communication protocol controller for digital channels formed in the modems, which control data transmission according to the predetermined communication protocol. Furthermore, reference numerals 13 and 23 designate frame synchronizing controller, which perform synchronizing control for communication.

### 2.Operation of the Embodiment

### (1)General Operation of the Embodiment

General operation of the embodiment of the present invention will be described hereafter, with reference to the drawings.

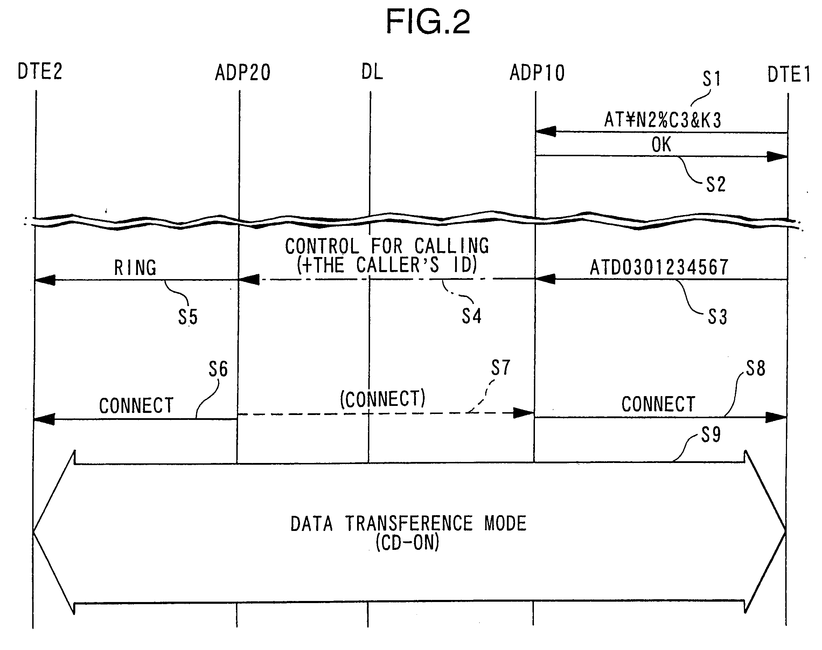

The embodiment will be concretely described by way of an example that the data transmission is performed from the note style computer DTE1 located in a train to the host computer DTE2. Fig.2 is a sequence diagram showing operation before data transfer.

In Fig. 2, if a communication software of the note style computer DPE1 corresponds to land line, a initializing command is transferred from the note style computer DTE1 to the communication adapter ADP10 at first (STEP S1). This initializing command is to initialize the set of the modem for land line, and an example of the initializing command is "AT¥N2%C3&K3" .

When the initializing command is transferred to the modem in the communication adapter ADP10, the signal "OK" is returned to the note style computer DTE1 (STEP S2). The modem is assumed to be for digital channels, while many of communication software merchandised at present corresponds to land line. For this reason, a response to the initializing command is prepared in the adapter ADP10. In this way, compatibility for communication software is maintained.

Next, when receiving the signal "OK", the note style computer DTE1 transmits the telephone number (ATD0301234567) of the opposite host computer DTE2 to the communication adapter ADP10(STEP S3), the communication adapter ADP10 supplies a caller's ID and the telephone number (ATD0301234567) to a digital communication channel DL (STEP S4). Then, when the digital communication channel DL performs call originating control, the communication adapter ADP20 transmits a signal "RING" to the host computer DTE2. This signal "RING" is a command indicating presence of call.

Then, when a handshake is established between the communication adapter ADP10 and the communication adapter ADP20, the communication adapter ADP20 detects the establishment and transmits a indication "CONNECT" indicating connection of the channel to the host computer DTE2 (STEP S6). The indication "CONNECT" is also transmitted to the communication adapter ADP10 through the digital communication channel DL (STEP 57), so that the communication adapter ADP10 transfers the indication to the note style computer DTE 1 (STEP S8). Accordingly, the note style computer DTE10 can recognize the ability of connection of the channel, and starts preparation for data transmission.

Then, the digital communication channel DL is connected between communication adapters APP10 and ADP20, and the mode proceeds to "data transference" (STEP S9). Then, the data is transferred from the note style computer DTE1 to the host computer DTE2. In this case, carriers are detected at the modems in the communication adapters ADP10 and ADP20, so that a CD indicator, showing this state is turned "ON."

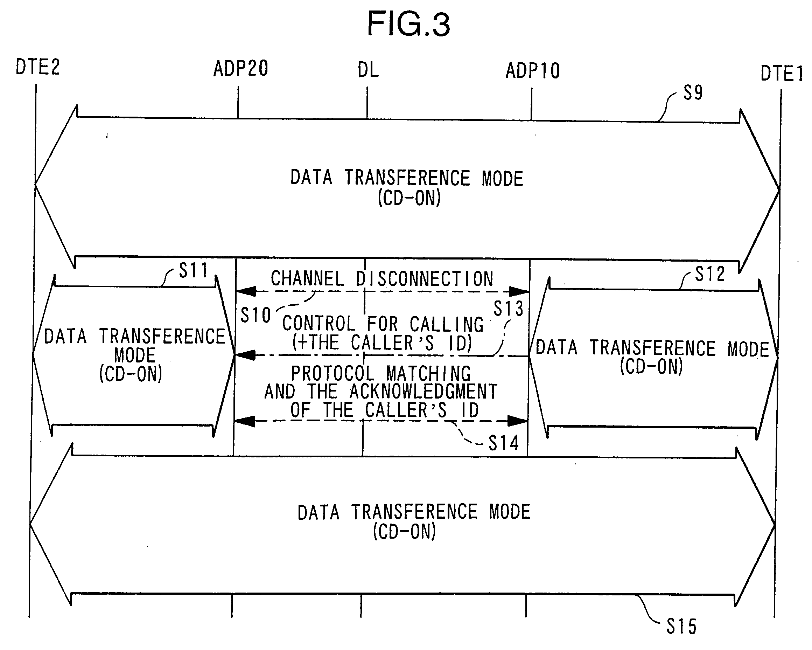

Operation will be described hereafter, with reference to Fig.3, in the case, where the train passes through a tunnel under this condition. Before the train passes through the tunnel, the data transference mode is maintained in STEP S9. However, if the train enters the tunnel, the digital communication channel DL is disconnected because of dropping radio wave (STEP S10). In such a case, according to prior equipment, the communication adapters ADP10 and ADP20 detect carrier drop, and turns "OFF," as well as transmit it to both the note style computer DTE1 and the host computer DTE2. Therefore, the prior equipment oblige users to operate the note style computer DTE1 or the host computer DTE2 so as to request calling again when the train goes out of the tunnel.

According to the embodiment, even if the digital communication channel DL is disconnected so that carrier drop is detected, the communication adapters ADP10 and ADP20 maintain data transference mode to the note style computer DTE1 and host computer DTE2 (STEP S11 and S12). For this reason, the note style computer DTE1 and the host computer DTE2 are in wait state for data, while the communication adapters ADP10 and ADP20 maintain "ON" state of CD indicator.

After the above mentioned operation, when the train goes out of the tunnel, receiving signal strength of the radio wave increases to be in the state of ability for communication. At the point of time, the communication adapter ADP10 transmits the caller's ID and the telephone number to the digital communication channel DL. Additionally, the caller's ID and the telephone number at this time are identical to those before disconnection of communication channel. For the transmission, the communication adapter ADP10 memorizes the caller's ID and the telephone number in the above mentioned STEP S4, and reads out at the moment, so as to transmit digital communication channel DL. If the data is received, the digital communication channel DL controls the communication adapter ADP20 to request calling again, and if a handshake is established, the caller's ID is supplied to the communication adapter ADP20(STEP S13). Then, the communication adapters ADP10 and ADP20 assure the matching of communication protocol(STEP S14). Specifically, the communication adapter ADP20 compares the caller's ID transferred at above STEP S with the one transferred in STEP 13, and if both IDs are identical, then a judgment result becomes that the protocols thereof being matched. While if both IDs are not identical, then the judgment in the adapter ADP20 becomes that the protocols thereof being mismatched.

If the protocols are judged to be matched, then the process proceeds to STEP S15, namely, the mode proceeds to data transmission to restart the data transmission from the note style computer DTE1 to the host computer DTE2. Thus, even if the digital communication channel is disconnected temporarily by deterioration of the radio channel quality, the communication can be restarted automatically when the preferable condition is recovered.

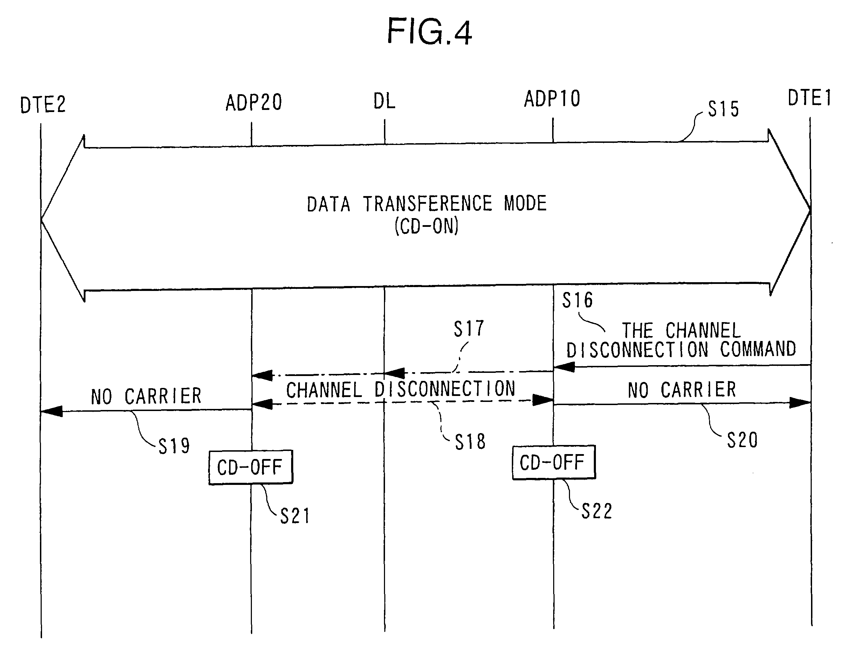

Operation will be described hereafter at the end of the communication with reference to Fig.4. In Fig.4 , when the data transmission mode is finished(STEP S15), a channel disconnection command is transmitted from the note style computer DTE 1 to the communication adapter ADP10(STEP S16). Then, the command is transmitted from the communication adapter ADP10 through the digital communication channel DL to the communication adapter ADP20 (STEP S17). When the digital communication channel DL is disconnected(STEP S18), both communication adapters ADP10 and ADP20 detect carrier drops, and transmit, the character "NO CARRIER " indicating this state, to the note style computer DTE1 and to the host computer DTE2 (STEP S19 and S20). The reason for employing the disconnection command for disconnection of the digital communication channel DL in this way is to distinguish the case of finishing in the communication from holding state which is caused at the time of disconnection of the communication channel by temporary deterioration of the radio channel quality till the communication is restarted.

### (2) General Operation of Communication Adapters ADP10 and ADP20

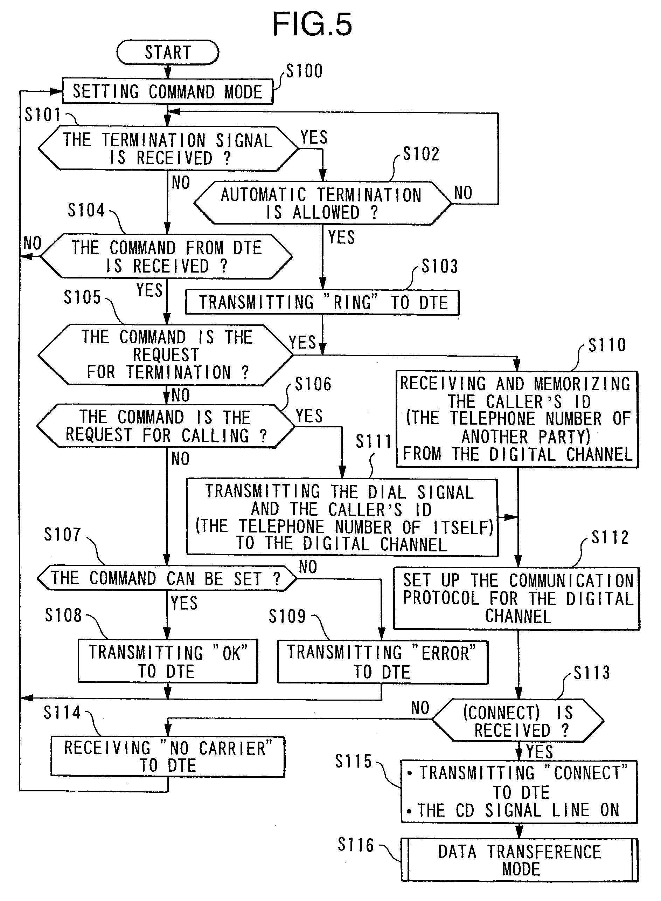

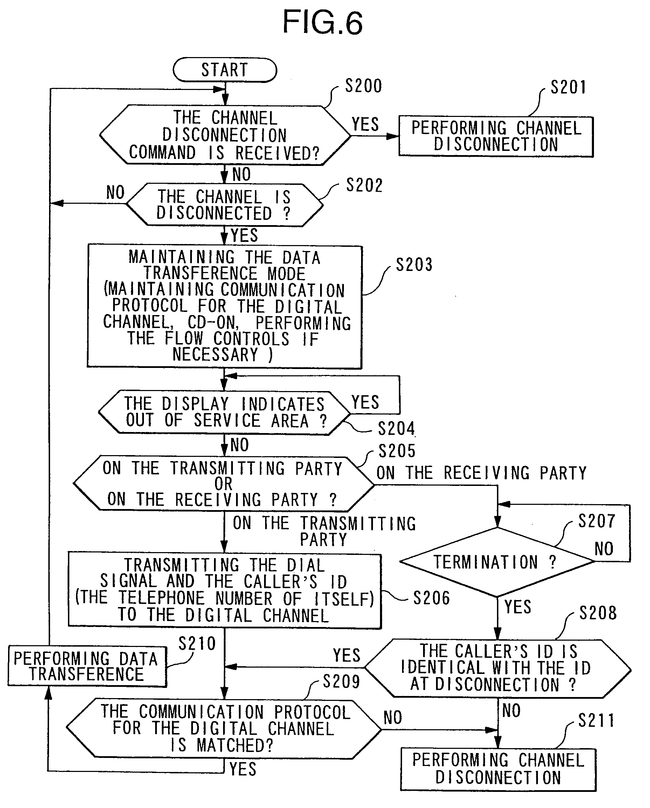

General operation of the communication adapters ADP10 and ADP20 will be described hereafter, with reference to Figs.5 and Fig. 6. At first, Fig.5 shows the operation from waiting state to data transference state. In case of waiting state, communication adapters ADP10 and ADP20 are set in receiving mode for the command from the note style computer DTE 1 from or the host computer DTE2(STEP S100). Then, a judgment is made in communication adapter ADP20 whether or not termination signal is received(STEP S101). If the signal is received, the judgment result becomes "YES", then the process proceeds to STEP S102. Then, a judgment is made whether or not automatic termination is allowed. If automatic incoming is not allowed, then the procedure is returned to STEP S102. On the other hand, if automatic termination is allowed, the communication adapter ADP20 transmits a signal "RING" indicating the call request to the note style computer DTE1 or the host computer DTE2(STEP S103).

While the termination is not received, the judgment result in STEP S101 becomes "NO", then the process proceeds to STEP S104. In STEP S104, a judgment is made whether or not any command is received from the note style computer DTE1 or the host computer DTE2. If any command is received, the judgment result becomes "YES", then the process proceeds to STEP S105. Then a judgment is made whether or not the received command is termination request. If the command is not termination request, the process proceeds to STEP S106, then a judgment is made whether or not the command is calling request. Further, if the command is not the calling command, and the process proceeds to STEP S107, then a judgment is made whether or not the command can be set in the adapters ADP10 and ADP20.

If the command can be set, the judgment result is "YES", and the process proceeds to STEP S108, then the communication adapters ADP10 and ADP20 transmit the character "OK" to the note style computer DTE1 or the host computer DTE2. Both communication adapters also perform the control corresponding to the command. On the other hand, if the received command cannot be set, then the judgment result becomes "NO" in STEP S106, and the process proceeds to STEP S109, and the character "ERROR" is transmitted to the note style computer DTE1 or the host computer DTE2. Additionally, when the transmission of the character "OK" or the character "ERROR" is finished, the procedure is returned to STEP S100 so as to be set for receiving another command.

Next, if the received command is the termination request, the judgment result becomes "YES" in STEP S105, and the process proceeds to STEP S110 so as to receive caller's ID (for example, the telephone number of another party) by the digital communication channel DL as well as to memorize it at a memory. Additionally, when the signal "RING" is transmitted, the same procedure is performed as the above described process after the process of STEP S110. The reason for memorizing the caller's ID is to assure the identity of transmitter when the communication channel is connected again after the prior disconnection thereof, so as to maintain the identity of the transmitter at recovery of the communication channel with the one at disconnection thereof. Further, if the received command is the command of originating call request, the judgment result in STEP S105 becomes "YES", and the process proceeds to STEP S111, and the signal of the dial and the caller's ID (for example, the telephone number of itself) are transmitted to the digital communication channel DL.

When the procedure of STEP S110 and STEP S111 are finished, the protocol for the digital channel is started(STEP S112), and a judgment is made whether or not an indication "CONNECT," the indication instructs to connect the communication channel, is received from the digital communication channel(STEP S113). If the indication is not received, then the judgment result becomes "NO". And the process proceeds to STEP S114, then "NO CARRIER" is transmitted to the note style computer DTE1 or the host computer DTE2. Thereafter, the procedure is returned to STEP S100 so that the communication adapters ADP10 and ADP20 are set in receiving mode for another command.

While if the character "CONNECT" is received, then the judgment result in STEP S113 becomes "YES", and the process proceeds to STEP S115, and a CD indication channel is provided with the state "ON". Then, the character "CONNECT" is transmitted to the note style computer DTE1 or the host computer DTE2. In this way, users can acknowledge that the channel has been connected. Thus, when the connection of the channel is established, the process proceeds to STEP S116, namely, the process proceeds to data transference mode and the data transmission is performed through the digital communication channel DL.

The process after the data transference mode proceeding will be described hereafter with reference to Fig.6. In Fig.6, a judgment in the communication adapters ADP10 and ADP20 is made whether or not the channel disconnection command is received (STEP S200). If the command is received, then the judgment result becomes "YES", and the process proceeds to STEP S201, the channel is disconnected, and the communication is finished. The channel disconnection command is usually transmitted to the note style computer DTE1 or the host computer DTE2, at the time of finishing the data transmission.

While, if the channel disconnection command is not received, then the judgment result in STEP S200 becomes "NO", and the process proceeds to STEP S202, then a judgment is made whether or not a channel disconnection is performed. In this case, the "channel disconnection" is not based on the channel disconnection command, but on the deterioration of the radio channel quality or other reasons. If the channel is not disconnected, then the judgment becomes negative, the procedure is returned to STEP S200. Accordingly, the procedures till STEP S200 is repeated, so that the data transmission may be performed during the repetition.

On the other hand, if the channel is disconnected, then the judgment result in STEP S202 becomes "YES", and the process proceeds to STEP S203. In this case, the data transmission is not performed because the channel is disconnected. However, the data transmission modes are maintained for the note style computer DTE1 or the host computer DTE2. Namely, the communication adapters ADP10 and ADP20 maintain their protocols for the digital data transmission, and flow controls are performed if necessary, as well as hold the state of CD indication "ON". For this reason, communication adapters ADP10 and ADP20 behave as if the mode were normal on transmitting the data. Additionally, the flow controls adjusts to restart after stopping the data transmission, the types are such a control by software as XOX/XOFF and others, otherwise such a control by hardware as RSCS and others.

Now that mobile station is used for performing data transmission among plural base stations, while it is impossible to perform data transmission if a mobile station stays out of service area . For this reason, mobile station detects signal strength of the predetermined band used for communication, which also recognize impossibility of communication if the value of the field strength is less than predetermined value, and the state "ON" is provided with the out of service area indicator. Therefore, the display "ON" indicates inability of communication, while the display "OFF" indicates ability of communication.

In STEP S204, a judgment is made whether or not the display indicates "ON". If the display indicates "ON", then the judgment result becomes "YES", and the judgments are made repeatedly till the display turns "OFF" . If the display turns "OFF", the judgment result becomes "NO", and the process proceeds to STEP S205. Such a case is observed, for example, as the train which carries the mobile station goes out of a tunnel, and the preferable condition of the radio wave is recovered again. In this way, if the condition of the radio wave is recovered, a judgment is made in each communication adapter respectively whether or not the station operates for calling, or for terminating(STEP S205).

If the station operates as a calling station, the dial signal and the caller's ID(local telephone number) is transmitted to the digital communication channel DL(STEP S206). On the other hand, if the station operates as a terminating station, then a judgment is made whether or not termination is received(STEP S207). While if termination is not received, then the judgments are made repeatedly till termination is received. If termination is received, then a judgment is made whether or not the received caller's ID is identical with the one at the channel disconnection(STEP S208). Specifically, the memorized caller's ID is read out in the above mentioned STEP S204, and the memorized caller's ID is compared with the received caller's ID, then a judgment is made whether or not both IDs are identical. In this way, the identity of the caller's ID between channel disconnection and channel recovery is assured. If both IDs are identical, then the judgment result in STEP S208 becomes "YES", and the process proceeds to STEP S209. Then a judgment is made whether or not protocol for communication by the digital channel is matched. Specifically, the judgment is made whether or not the frame number of request for retransmission (ACK/NAK) just before disconnection of ARQ protocol is continuous to the one after reconnection.

If the protocol for communication by the digital channel is matched, then the judgment result becomes "YES", and the process proceeds to STEP S210. Then, the data transmission is performed, as well as the mode proceeds to data transference. In this way, the interrupted data transmission is restarted. And, the procedure is returned to STEP S200 again, then the procedures till STEP S210 is repeated. While, if the protocol for communication by the digital channel is not matched, or if the both IDs are different, then the judgment result in STEP S209 or STEP S208 becomes "NO", and the process proceeds to STEP S211. In each case, the channel disconnection is performed. Additionally, the channel disconnection in this case is the same as the based on the channel disconnection command in the above mentioned STEP S201. Then, request for the channel disconnection is transmitted to the digital communication channel DL.

As the above described, according to the present embodiment, when the train passes through a tunnel and the channel is disconnected, for example, the communication adapters ADP10 and ADP20 operates for the note style computer DTE1 or the host computer DTE2 as if they waited for data. Further, when the train goes out of the tunnel and the communication channel recovers, users do not need to call up again because the data transmission restarts automatically. Furthermore, when the data transmission restarts, the identity of the transmitter can be established because the data transmission is restarted only when the caller's ID at disconnection of the channel is compared with the one at recovery and the former is identical with the latter. Moreover, the continuity of the data is assured because the matching of the protocol for communication is also checked.

In addition, it is not necessary to change software for communication and to change the digital communication channel DL because its adaptation is provided only with exchange of the communication adapters ADP10 and ADP20, so that the adaptation for preset communication system is well. It is still possible to coexist with leakage coaxial cables when they are constructed in future.

### 3. Modifications

The present invention should not be understood as the definition that the above mentioned embodiment. For example, it is possible to think various modifications described hereafter.
① As for the embodiment, although channel for data transmission is described as the digital communication channel DL , the present invention is not defined for the channel as the digital communication channel, of course, because it is possible for even usual land line channels to perform the data transmission with proper modulation thereto.
② The embodiment is described as data transmission is restarted under conditions such as an over area display indicates the state "OFF" after channel disconnection(referring to STEP S204 in Fig.5) . present invention should not be defined, it is also allowed to restart for the data transmission under other conditions only if the recovery of the channel is detected.
③ The above mentioned embodiment is also allowed to make the communication finished by a flow control in STEP S203, if the channel is not recovered within a predetermined period after the channel disconnection. Specifically, it may be accomplished by controls to detect the channel disconnection, and to start to measure time, then to finish the communication if the measured time value exceeds the predetermined time value.
④ In the above mentioned embodiment, the note style computer DTE1 establishes the communication with the communication adapter ADP10 according to internal application software. Some types thereof control the note style computer DTE1 to transmit a confirm command to confirm whether or not the state of communication is normal if the data transmission is not performed within a predetermined period. Then the application software also control the note style computer DTE1 to finish the communication if a response command corresponding to the confirm command is not returned. Keep Alive Packet, in TCP/IP(Transmission Control Protocol Internet Protocol), corresponds to the confirm command, for example.
   If the channel is disconnected when the train enters a tunnel, and if the channel disconnection continues during a predetermined period, then a confirm signal is transmitted from the note style computer DTE1 through the communication adapter ADP10. In this case, the communication adapter ADP10 behaves as if the channel were alive, however, it cannot respond to the confirm command, therefore, the communication is finished after all.
   Accordingly, it may be effective to detect the confirm command by the communication protocol controller 12 for the digital channel, of the communication adapter ADP10(referring to Fig.1), and to transmit a response command to the note style computer DTE1 in detecting the confirm command. This response command is set as the data mode recognized normally by the application software. In this way, the note style computer DTE1 confirms whether or not another party operates normally, the communication is performed successively. In addition, the communication protocol controller 22 for digital channel, of the communication adapter ADP20, may be constructed as the same with the communication protocol controller 12.
   Another improvement can be taken as altering the application software. In this case, it is effective to change time from missing of the communication, between located transmission and moving one, to transmitting of the confirm command. For example, it can be thought to set for longer time at the state from missing of the communication to transmitting the confirm command, than the time at the state of ordinary communication, when users click an icon representing railway in advance, by a mouse, which is indicated at the start of the application software, so as to be regarded as mobile communication is performed.
⑤ For the above mentioned embodiment, only digital data may be adapted to the data used for communication, such as electronic mail, data by facsimile, data for image, and others.
⑥ The above mentioned embodiment is also allowed to make the communication finished by a flow control in STEP S203, if the channel is not recovered within a predetermined period after the channel disconnection. Specifically, it may be accomplished by controls to detect the channel disconnection, and to start to measure time, then to finish the communication if the measured time value exceeds the predetermined time value.

### 4. Effect

As the above described, according to the present invention, the data transmission can be restarted without any disadvantages for users when the channel is disconnected. Moreover, the present invention can be provided without any special facilities, but with only simple composition.

## Claims

1. A data link transmission equipment, intermediate between a terminal and a communication channel, comprising:
call request means for requesting call originating or call receiving from the communication channel in response to a command from the terminal;
control means for controlling the communication channel, for connecting the communication channel with the terminal to transmit the data transferred from the terminal to the communication channel, and for controlling the communication channel, connecting the communication channel with the terminal to transfer the data received from the communication channel to the terminal; and
re-call request means for requesting call originating or call receiving again with the proviso that the communication channel is disconnected during the data transmission, and that recovery of the communication channel is detected successively.

2. A data link transmission equipment intermediate between a terminal and a communication channel comprising:
call request means for requesting call originating or call receiving from the communication channel in response to a command from the terminal;
response means for detecting a confirm command transmitted from the terminal, the confirm command confirming that the state of communication is in order, and for returning a response command to the terminal, the response command showing that the state of communication is in order;
control means for controlling the communication channel, for connecting the communication channel with the terminal to transmit the data transferred from the terminal to the communication channel, and for controlling the communication channel, connecting the communication channel with the terminal to transfer the data received from the communication channel to the terminal; and
re-call request means for requesting call originating or call receiving again with the proviso that the communication channel is disconnected during the data transmission, and that recovery of the communication channel is detected successively.

3. The data link transmission equipment according to 1 or 2, further characterized in:
that the control means on a transmitting party is to transmit a discriminating data for identifying the transmitter, as well as the data transferred from the terminal, to the communication channel;
that the control means on a receiving party is to memorize the discriminating data, as well as transferring the data received from the communication channel, to the terminal; and
that the control means on the receiving party connects the terminal with the communication channel again, with the proviso that the communication channel is disconnected during transmitting the data, and that recovery of the communication channel is detected successively, and that the identity between the memorized discriminating data and the received discriminating data is detected.

4. A data transmission system comprising:
a terminal to perform at least either transmission or receiving of data; and
data link transmission equipment according to anyone of claims 1, 2 or 3.

5. A data transmission method to transmit data between a pair of terminals through a communication channel, the method comprising:
a step to request call originating or call receiving from the communication channel in response to a command from the terminal;
a step to connect the communication channel with the terminal to transmit the data transferred from the terminal to the communication channel, and for controlling the communication channel, connecting the communication channel with the terminal to transfer the data received from the communication channel to the terminal;
a step to memorize the discriminating data, as well as transferring the data received from the communication channel, to the terminal;
a step to request recall originating independent of the command from the terminal and to transmit the discriminating data to the communication channel, with the proviso that the communication channel is disconnected during the data transmission, and that recovery of the communication channel is detected successively;
a step to request recall receiving independent of the command from the terminal and to receive the discriminating data to the communication channel, with the proviso that the communication channel is disconnected during the data transmission, and that recovery of the communication channel is detected successively;
and
a step to restart the data transmission with the proviso that the identity between the received discriminating data and the memorized discriminating data is detected.
